(19) Europäisches Patentamt
European Patent Office
Office européen des brevets

(11) Veröffentlichungsnummer: **0 435 071 B1**

# (12) EUROPÄISCHE PATENTSCHRIFT

(45) Veröffentlichungstag der Patentschrift: **23.11.94**

(51) Int. Cl.$^5$: **C07F 9/141**, C07F 9/6574

(21) Anmeldenummer: **90123911.1**

(22) Anmeldetag: **12.12.90**

## (54) Verfahren zur Herstellung hydrolysestabiler organischer Phosphite.

(30) Priorität: **23.12.89 DE 3942787**

(43) Veröffentlichungstag der Anmeldung:
**03.07.91 Patentblatt 91/27**

(45) Bekanntmachung des Hinweises auf die Patenterteilung:
**23.11.94 Patentblatt 94/47**

(84) Benannte Vertragsstaaten:
**AT BE CH DE ES FR GB IT LI NL SE**

(56) Entgegenhaltungen:
**FR-A- 2 465 740**

(73) Patentinhaber: **HOECHST AKTIENGESELLSCHAFT**

**D-65926 Frankfurt (DE)**

(72) Erfinder: **Bahrmann, Helmut, Dr. Dipl. Chem.**
**Rohstrasse 48**
**W-4236 Hamminkeln (DE)**
Erfinder: **Fell, Bernhard, Prof. Dr. Dipl.-Chem.**
**Im Mittelfeld 6**
**W-5100 Aachen (DE)**
Erfinder: **Papadogianakis, Gerogios, Dipl.-Chem.**
**Robensstrasse 65**
**W-5100 Aachen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 435 071 B1

## Beschreibung

Die Erfindung betrifft ein Verfahren zur Herstellung hydrolysestabiler organischer Phosphite, die in organischen Medien lösliche Ammoniumsalze bilden.

Phosphorigsäure-triester (organische Phosphite) sind oxidationsempfindliche und leicht hydrolysierbare Verbindungen. Sie finden als Antioxidantien in Schmiermitteln Anwendung, wobei sie den Sauerstoff abfangen und zu Phosphaten oxidiert werden. Als Stabilisatoren für Polyvinylchlorid beruht ihre Wirkung darauf, daß sie unter dem Einfluß von Luft, UV-Licht und/oder Wärme aus dem Polymeren freigesetzten Chlorwasserstoff zu binden vermögen (vgl. z.B. GB-PS 803 557 und US-PS 3 516 963).

Außer als Antioyidantien in Schmiermitteln und Stabilisatoren in organischen Polymeren finden die organischen Phosphite als Cokatalysatoren bei der Hydroformylierung Anwendung. Rhodium/Phosphit-Katalysatorsysteme sind für diese Reaktion hochaktiv und eignen sich auch für die Umsetzung schwer hydroformylierbarer Olefine wie n-Buten-2, 2-Methylpropen, Vinylacetat, Cyclohexen, Acrolein und Acrylnitril.

Organische Phosphite sind sehr hydrolyseempfindliche Substanzen. Sie werden mit Wasser (schneller in Gegenwart von Basen, noch schneller durch wäßrige Säuren) zu Phosphorigsäure-diestern (sekundäre Phosphite), darüberhinaus zu Monoestern (primäre Phosphite) oder freier phosphoriger Säure verseift. So können bereits Spuren Wasser im Laufe der Zeit das als Hydroformylierungskatalysator eingesetzte Rh/Phosphit-System desaktivieren.

Die Hydrolysegeschwindigkeit hängt stark von der Art der Esterreste ab. Trimethylphosphit ist an unbeständigsten; mit zunehmender Kettenlänge werden die Phosphite gegenüber hydrolytischen Einflüssen stabiler. Nach A. E. Arbusov und M. G. Imaev [C.A.51, 13741g (1957)] liegt die Hydrolysegeschwindigkeit von Triphenylphosphit zwischen der des Triethylphosphits und der des Tripropylphosphits.

M. G. Imaev [C.A. 55 24531 f (1961)] fand, daß die Zugabe von organischen und anorganischen Basen die Hydrolyse von Trialkylphosphiten verzögert und Triethylamin besser wirkt als Pyridin. Der Autor nimmt an, daß die Base das zunächst entstandene sekundäre Phosphit durch Bildung eines Salzes abfängt und dadurch die weitere Hydrolyse verzögert.

In EP 285 136 A2 wird ein Verfahren zur Trennung von sekundären und tertiären Phosphit beschrieben. Hierzu versetzt man die Lösung der beiden Phosphite in einem organischen Lösungsmittel mit Wasser und einem Amin. Aus den sekundären Phosphit bildet sich das Salz des primären Phosphits von dem das tertiäre Phosphit abgetrennt wird.

Die EP 149 894 A2 betrifft ein Hydroformylierungsverfahren, in dem als Katalysator eine Rhodiumkomplexverbindung eingesetzt wird, die Kohlenmonoxid und als weiteren Liganden ein cyclisches Phosphit enthält. Zur Stabilisierung des Phosphits fügt man dem Katalysator noch ein tertiäres Amin hinzu. Es hat die Aufgabe, saure Spaltprodukte abzufangen, die während der Hydroformylierung durch saure Hydrolyse dieser cyclischen Phosphite entstehen und den Katalysator desaktivieren. Darüberhinaus katalysieren die Spaltprodukte auch die weitere Hydrolyse der Phosphite. Die Fähigkeit tertiärer Amine, die cyclischen Phosphite zu stabilisieren, soll sich nach den Angaben in der EP 149 894 A2 auf cyclische, nicht jedoch auf acyclische (offene) Phosphite erstrecken.

Y. Matsui [Bulletin of the Japan Petroleum Institute 19, No.1, S.62-67 (1977)] hat das System RhH(CO)-$(PPh_3)_3/P(OPh_3)$ als Hydroformylierungskatalysator eingesetzt. Die Lebensdauer dieses Katalysators betrug nur vier Stunden. Nach Zugabe von Tri-n-octylamin konnte sie auf über 10 Stunden erhöht werden. Die Wirkung der Amine soll darauf beruhen, daß die sauren Spaltprodukte der Phosphite abgefangen werden. Überdies sollen sie den Katalysator dadurch stabilisieren, daß sie Spaltprodukte der Phosphite daran hindern, Koordinationskomplexe mit den Rhodium zu bilden.

In EP 167 969 A2 und EP 143 464 B1 werden Phosphite mit Zusätzen von Aminen beschrieben, die eine größere Stabilität gegenüber Wasser aufweisen als die gleichen Phosphite ohne Aminzusatz.

In der japanischen Patentanmeldung 81.113 790 wird der Einfluß von Diethanoldodecylamin auf die Hydrolyse von Distearylpentaerythritoldiphosphit beschrieben. Ein Gemisch aus 100 Gew.-teilen des Phosphits und 5 Gew.-teilen des Amins absorbiert in 96 h bei 20 °C und 90% relativer Luftfeuchtigkeit, 7`1 % Wasser. Unter sonst gleichen Bedingungen, jedoch ohne Aminzusatz nimmt das Phosphit 21,4% Wasser auf.

Es stellte sich daher die Aufgabe, ein Verfahren zu entwickeln, das die Herstellung hydrolysestabiler organischer Phosphite ermöglicht.

Die Erfindung besteht in einem Verfahren zur Herstellung hydrolysestabiler organischer Phosphite. Es ist dadurch gekennzeichnet, daß man organische Phosphite (Phosphorigsäure-triester) oder Phosphorhalogenverbindungen der allgemeinen Formeln $PX_3$ oder $(R^3O)PX_2$, wobei X für Chlor, Brom oder Jod und $R^3$ für gegebenenfalls substituierte aliphatische, cycloaliphatische oder aromatische Kohlenwasserstoffreste

stehen, mit der äquivalenten Menge oder einem Überschuß oder einem Unterschuß eines in Wasser unlöslichen, in einem organischen Lösungsmittel löslichen Ammoniumsalz einer Hydroxysulfonsäure umsetzt.

Unter Hydroxysulfonsäuren im Sinne der Erfindung versteht man organische Verbindungen, die gleichzeitig mindestens eine Hydroxyl-(-OH) und mindestens eine Sulfonsäuregruppe ($-SO_3H$) enthalten. Diese Verbindungen lassen sich durch die allgemeine Formel (1)

$$(HO_3S)_n - Y - (OH)_m \qquad (1)$$

wiedergeben, wobei Y für einen organischen Rest steht. Dementsprechend zählen zu ihnen sulfonierte Hydroxyverbindungen, die sich von aliphatischen, cycloaliphatischen, aromatischen und heterocyclischen Grundstrukturen ableiten. Die aliphatischen Verbindungen können geradkettig oder verzweigt und, wie die cycloaliphatischen Verbindungen, gesättigt oder ungesättigt sein. Zu den cycloaliphatischen und den aromatischen Verbindungen zahlen sowohl einkernige als auch mehrkernige Strukturen. Ebenso gehören zu den Hydroxysulfonsäuren entsprechend der Erfindung aliphatischaromatische wie auch aromatisch-aliphatische Verbindungen. Als heterocyclische Verbindungen kommen gesättigte oder ungesättigte Fünf- oder Sechsringe mit Stickstoff, Sauerstoff oder Schwefel als Heteroatom in Betracht. Im Molekül können ein oder auch zwei gleiche oder verschiedene Heteroatome enthalten sein. Überdies kann der Heterocyclus mit einem weiteren heterocyclischen Fünf- oder Sechsring oder mit einem Benzolring kondensiert sein. Alle Verbindungen können noch weitere Substituenten tragen, von denen der Fachmann weiß, daß sie sich in der Reaktion inert verhalten.

Insbesondere steht Y in der obigen Formel für geradkettige oder verzweigte gesättigte aliphatische Reste mit 2 bis 20 Kohlenstoffatomen, für ein- und zweikernige cycloaliphatische Reste mit 5 bis 12 Kohlenstoffatomen und für ein- und zweikernige aromatische Reste. Die aromatischen Reste leiten sich vorzugsweise vom Benzol, vom Biphenyl, vom Naphthalin und vom Binaphthyl ab. Als Alkylarylrest hat sich vor allem der leicht zugängliche Benzylrest bewährt. Arylalkylreste gehen bevorzugt auf Toluol, Ethylbenzol und die isomeren Xylole zurück. Unter den Heterocyclen sind Reste Stickstoff enthaltender, gesättigter oder ungesättigter Fünf- oder Sechsringe von Bedeutung, insbesondere Pyridin. Schließlich bedeuten m eine ganze Zahl von 1 bis 3 und n eine ganze Zahl von 1 bis 4.

Zur Herstellung der hydrolysestabilen organischen Phosphite nach dem neuen Verfahren kann man die freien Hydroxysulfonsäuren einsetzen, die z.B. aus ihren Salzen durch Ionenaustausch zugänglich sind. Es ist aber auch möglich, von wasserlöslichen Hydroxysulfonsäuresalzen der allgemeinen Formel $(MO_3S)_n$-Y-$(OH)_m$ auszugehen, die man durch Reaktion mit einer Säure in die freie Hydroxysulfonsäure überführt. In dieser allgemeinen Formel steht M für ein Wasserstoff-, ein Alkalimetall-, oder Ammoniumion der Formel $[NR_4]^+$, in der R jeweils Wasserstoff und/oder gleiche oder verschiedene geradkettige oder verzweigte $C_1$- bis $C_4$-Alkylreste sind. M kann ferner das Äquivalent eines Erdalkalimetall-, Blei- oder Kupferions sein. Y, m und n haben die weiter oben wiedergegebene Bedeutung. Üblicherweise setzt man die Säure bezogen auf das Sulfonat in stöchiometrischer Menge ein. Ein geringer Säureüber- oder -unterschuß stört jedoch nicht. Bewährt hat es sich je Äquivalent Metall 0,8 bis 1,2 Äquivalente Säure anzuwenden. Geeignet für die Umsetzung sind alle starken Säuren, insbesondere Mineralsäuren wie $H_2SO_4$, HCl, $HNO_3$, $H_3PO_4$, HF und $HBF_4$, bevorzugt wird $H_2SO_4$; die Säuren werden in Form wäßriger Lösungen eingesetzt.

Zur Umwandlung der Hydroxysulfonate in die freien Hydroxysulfonsäuren versetzt man die Hydroxysulfonatlösung unter Aufrechterhaltung einer Temperatur von 0 bis 90 °C, insbesondere 20 bis 40 °C mit soviel Wasser und wäßriger Säure, daß das Reaktionsgemisch 0,5 bis 80 Gew.-%, vorzugsweise 25 bis 35 Gew.-% Hydroxysulfonat, bezogen auf die Lösung enthält. Die Konzentration der wäßrigen Säure beträgt 0,1 bis 5 mol/l, vorzugsweise 1 bis 2 mol/l.

Die, wie vorstehend beschrieben erhaltene wäßrige Lösung der Hydroxysulfonsäure kann unmittelbar weiterverarbeitet, d. h. mit einen Amin umgesetzt werden.

Als wasserunlösliche Amine wendet man gemäß der Erfindung aliphatische, cycloaliphatische, aromatische, araliphatische oder heterocyclische Verbindungen, vorzugsweise geradkettige oder verzweigte aliphatische Amine mit insgesamt 10 bis 60, insbesondere mit 12 bis 36 Kohlenstoffatomen an. Weniger geeignet sind Amine, deren Hydroxysulfonate im organischen Lösungsmittel nicht oder nur beschränkt löslich sind. Als Beispiele für besonders bewährte Amine seien genannt: Tri-n-octylamin, Tri-iso-octylamin, Tri-2-ethylhexylamin, Methyl-di-octylamin und Tridodecylamin.

Die Amine werden in einem wasserunlöslichen organischen Lösungsmittel gelöst. Geeignet sind insbesondere aliphatische oder aromatische Kohlenwasserstoffe oder Kohlenwasserstoffgemische, z. B. Toluol oder kerosinähnliche Fraktionen, daneben auch $C_8$- bis $C_{20}$-Ether.

Die Konzentration des Amins in der Lösung beträgt 0,5 bis 35 Gew.-%, vorzugsweise 10 bis 30 Gew.-% und insbesondere 15 bis 25 Gew.-% bezogen auf die Lösung. Je Äquivalent Sulfonsäure wendet man 0,5 bis 1,5 mol, vorzugsweise 0,8 bis 1,2 mol Amin an. Der Einsatz überschüssigen Amins stellt sicher, daß nur geringe Ausbeuteverluste eintreten. Ein höherer Aminüberschuß als beschrieben kann zwar angewendet werden, er führt jedoch nicht zu einer Verbesserung der Trenn-bzw. Reinigungsoperation oder der Ausbeute.

Die Umsetzung der Hydroxysulfonsäure mit dem Amin erfolgt durch intensives Mischen der wäßrigen Säurelösung mit der Lösung des Amins in dem organischen Lösungsmittel bei Raumtemperatur; die Anwendung höherer Temperaturen ist nicht unbedingt erforderlich, bringt aber in manchen Fällen Vorteile. Nach Beendigung der Reaktion trennt man die Phasen. Die spezifisch leichtere, das Aminsalz enthaltende organische Phase wird getrocknet. Geeignete Trocknungsmittel sind z. B. $MgSO_4$ oder $Na_2SO_4$, restliche Wasserspuren können durch Behandlung in einem Wasserabscheider entfernt werden.

Im letzten Schritt der mehrstufigen Synthese wird das in einem organischen Lösungsmittel gelöste Ammoniumsalz der Hydroxysulfonsäure mit einem organischen Phosphit oder einer Phosphorhalogenverbindung umgesetzt. Die Umesterung (Alkoholyse) des Phosphits erfolgt bei Temperaturen zwischen 20 und 200 °C, insbesondere 80 und 160 °C und bei Normaldruck oder Unterdruck. Obwohl es möglich ist, einen der beiden Reaktionspartner im Überschuß anzuwenden, werden im allgemeinen Hydroxysulfonat und Phosphit in äquivalenten Mengen zur Reaktion gebracht. Auf diese Weise können die Alkoholreste im Phosphit auch sukzessive durch Hydroxysulfonat unter Bildung gemischter Ester ersetzt werden. Die Reaktion wird durch Katalysatoren, z.B. Amine, Natrium, Natriumalkoholate, Aluminiumtrichlorid, Titansäureester oder Phosphorigsäuredialkylester beschleunigt. Bevorzugt wendet man als Katalysator das für die Salzbildung mit der Hydroxysulfonsäure benutzte Amin an. Es empfiehlt sich daher, die Hydroxysulfonsäure mit einem Überschuß von 1-10 % über die stöchiometrisch erforderliche Menge Amin umzusetzen. In der Praxis mischt man die Reaktionspartner Hydroxysulfonat, organisches Phosphit und Katalysator und destilliert den aus dem organischen Phosphit freigesetzten Alkohol bzw. das freigesetzte Phenol aus dem Gleichgewicht ab. Besonders bewährt hat es sich, die Destillation in einem Fallfilmverdampfer unter stark vermindertem Druck durchzuführen.

Als organische Phosphite, die durch Alkoholyse in Ester der Hydroxysulfonate umgewandelt werden, kann man Verbindungen der allgemeinen Formel $(R^2O)_3P$ einsetzen wobei $R^2$ gleich oder verschieden ist und für einen gegebenenfalls substituierten aliphatischen oder aromatischen Kohlenwasserstoffrest, vorzugsweise mit 1 bis 12 Kohlenstoffatomen steht. Beispiele für solche Phosphite sind Trimethylphosphit, Triethylphosphit, n-Butyldiethylphosphit, Tri-n-propylphosphit, Tri-n-butylphosphit, Tri-2-ethylhexylphosphit, Tri-n-octylphosphit, Tri-n-dodecyclphosphit, Dimethylphenylphosphit, Diethylphenylphosphit, Triphenylphosphit. Bevorzugtes organisches Phosphit ist das Triphenylphosphit.

Alternativ zu dem vorstehend beschriebenen Weg kann man zur Herstellung hydrolysestabiler Phosphite auch Phosphorhalogenverbindungen mit den Ammoniumsalzen von Hydroxysulfonsäuren umsetzen. Besonders geeignete Phosphorhalogenverbindungen sind die Phosphortrihalogenide $PCl_3$, $PBr_3$ und $PJ_3$, unter ihnen insbesondere das $PCl_3$, sowie Esterhalogenide der phosphorigen Säuren der allgemeinen Formel $(R^3O)PX_2$. In dieser Formel steht $R^3$ für gegebenenfalls substituierte aliphatische, cycloaliphatische oder aromatische Kohlenwasserstoffreste und X für Chlor, Brom oder Jod. Die Kohlenwasserstoffreste enthalten vorzugsweise 1 bis 12 Kohlenstoffatome. Beispiele für den Kohlenwasserstoffrest $R^3$ in den Phosphorigsäureesterhalogeniden sind der Methyl, Ethyl, n-Propyl,n-Butyl, i-Butyl, 2-Ethylhexyl, n-Octyl, n-Dodecyl und der Phenylrest. Besonders geeignet ist der Phenylrest.

Die Umsetzung des in einem organischen Lösungsmittel gelösten Ammoniumsalzes der Hydroxysulfonsäure mit der Phosphorhalogenverbindung erfolgt bei Temperaturen zwischen 20 und 200 °C, bevorzugt werden 80 bis 160 °C. Üblicherweise läßt man die Reaktionspartner bei Normaldruck miteinander reagieren, doch können sowohl Überdruck als auch Unterdruck angewendet werden. Es ist zweckmäßig, auch die Phosphorhalogenverbindung in einem Lösungsmittel, vorzugsweise dem für die Hydroxysulfonsäure verwendeten, gelöst einzusetzen. Im allgemeinen läßt man die Ausgangsstoffe in äquivalenten Mengen miteinander reagieren, d.h. je Halogenatom wird eine OH-Gruppe zur Reaktion gebracht. Im Falle der Phosphorigsäureesterhalogenide ist auch eine Umesterung des $R^3O$-Restes möglich. Der Überschuß eines der beiden Reaktanten stört nicht, kann jedoch zu einen höheren Aufwand bei der Reinigung der Anmoniumsalze der Hydroxysulfonsäure führen.

Nach Beendigung der Umsetzung destilliert man zur vollständigen Entfernung des im Verlauf der Reaktion gebildeten Halogenwasserstoffs und gegebenenfalls Alkohols oder Phenols sowie des organischen Lösungsmittels und möglicherweise vorhandener überschüssiger Ausgangsstoffe. Die gewünschte Verbindung erhält man zumeist in hoher Reinheit als Rückstand der Destillation.

Von besonderer Bedeutung sind hydrolysestabile organische Phosphite der nachstehend wiedergegebenen Formeln. Sie enthalten zum Teil Strukturbestandteile von Farbstoffmolekülen, daher wird man Ausgangssubstanzen zu ihrer Herstellung unter den Zwischenprodukten der Farbstoffsynthese finden, z. B. Naphtholsulfonsäuren, wie Schäffersäure und Neville-Winter-Säure, Naphtholdisulfonsäuren wie G-Säure und R-Säure sowie Dinaphtholdisulfonsäuren wie Chromotropsäure.

Eine Gruppe wichtiger hydrolysestabiler organischer Phosphite entspricht der allgemeinen Formel (2)

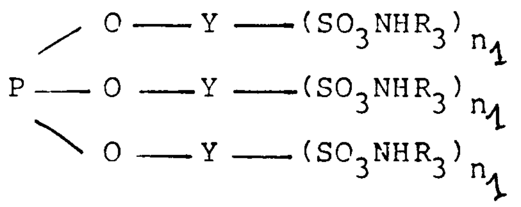

(2)

in der Y die unter Formel (1) genannte Bedeutung hat und gleich oder verschieden ist. $n_1$ ist eine ganze Zahl von 0 bis 4, ebenfalls gleich oder verschieden mit der Maßgabe, daß mindestens ein $n_1$ = 1 ist. Auch R ist gleich oder verschieden und steht für aliphatische, aromatische, araliphatische, homocyclische oder heterocyclische Reste. Vorzugsweise ist R ein geradkettiger oder verzweigter Alkylrest wobei die drei über das Stickstoffatom mit dem Sulfonsäurerest in Verbindung stehenden Reste R zusammen 10 bis 60 und vorzugsweise 12 bis 36 Kohlenstoffatome enthalten.

Zu den der allgemeinen Formel (2) entsprechenden Verbindungen gehören Ammoniumsulfonate von Trialkylphosphiten wie Trimethylphosphit, Triethylphosphit, Butyldiethylphosphit, Tri-n-propylphosphit, Tri-n-butylphosphit, Tri-2-ethylhexylphosphit, Tri-n-octylphosphit, Tri-n-dodecylphosphit, von Dialkylarylphosphiten wie Dimethylphenylphosphit, Diethylphenylphosphit, von Alkyldiarylphosphiten wie Methyldiphenylphosphit, Ethyldiphenylphosphit und von Triarylphosphiten wie Triphenylphosphit und Trinaphtylphosphit. Das bevorzugte Phosphit dieser Gruppe ist das Triphenylphosphittrisulfonsäure-triisooctylammoniumsalz.

Eine weitere Gruppe wichtiger hydrolysestabiler organischer Phosphite folgt der allgemeinen Formel (3)

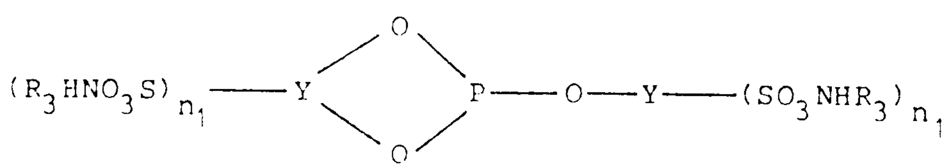

(3)

In dieser Formel hat Y die unter Formel (1) genannte Bedeutung, vorzugsweise steht es für Reste, die sich von Benzol, Biphenyl, Naphthalin oder Binaphtyl ableiten. $n_1$ steht für die unter Formel (2) genannten ganzen Zahlen. Auch die Bedeutung von R ist unter Formel (2) wiedergegeben.

Bevorzugte Ammoniumsulfonate von Phosphiten gemäß Formel (3) sind:

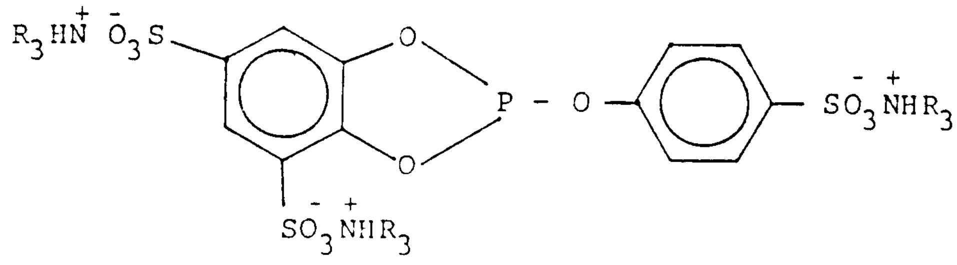

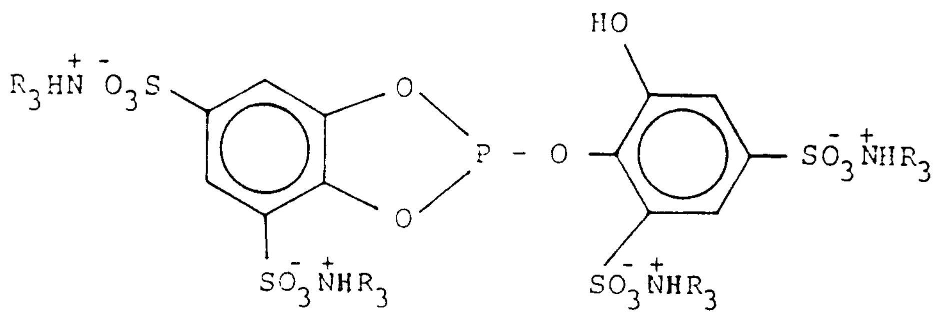

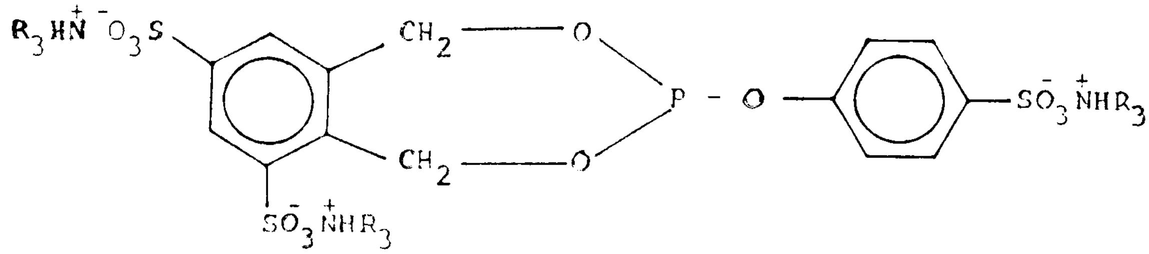

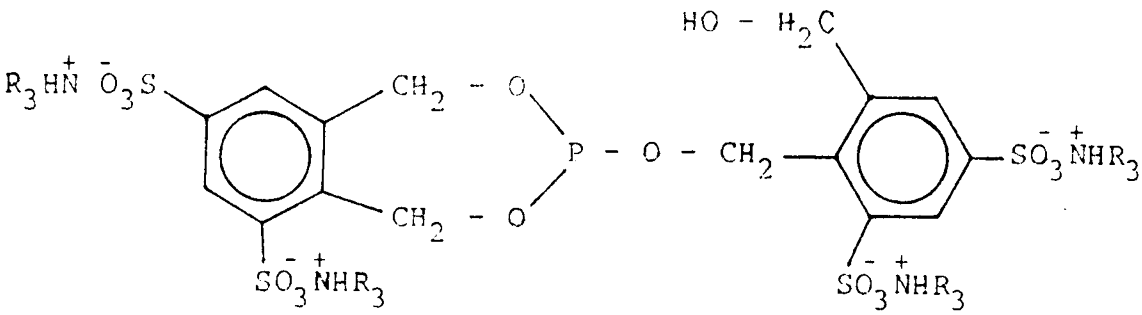

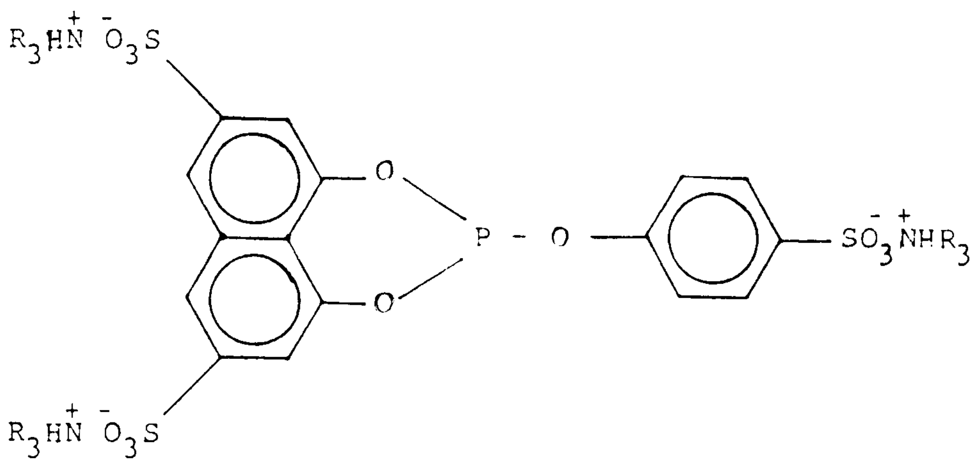

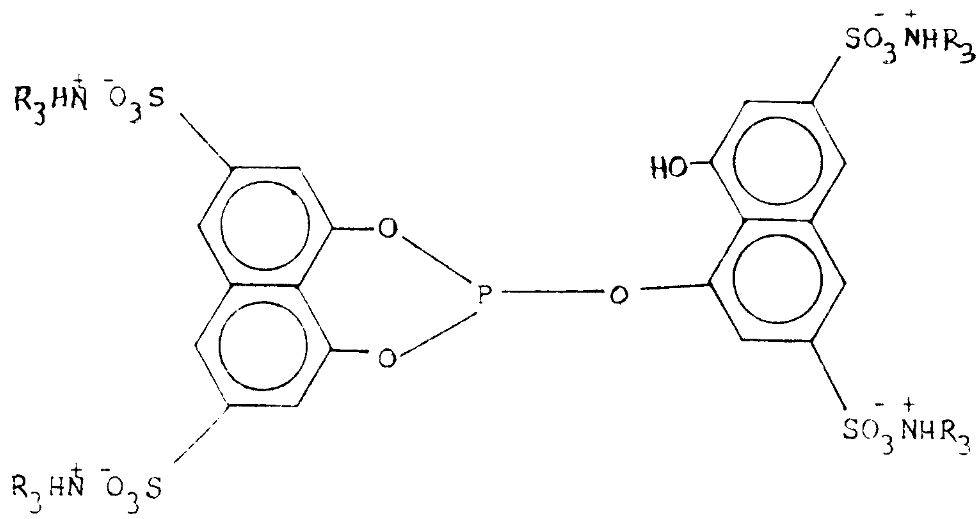

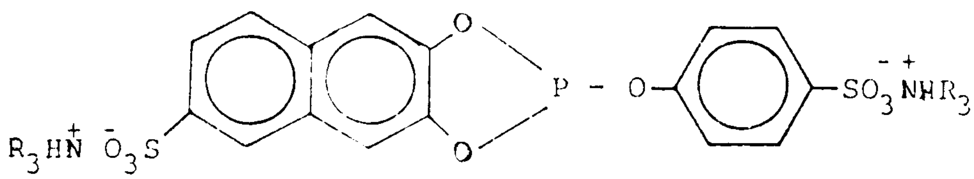

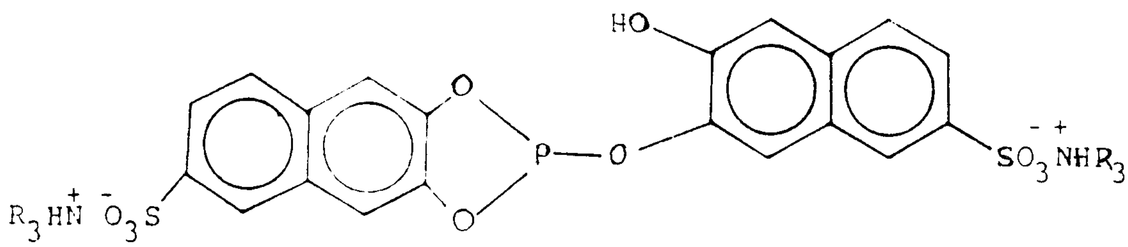

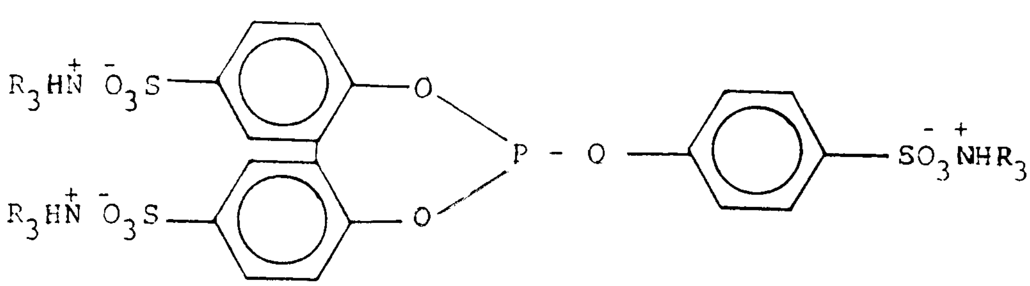

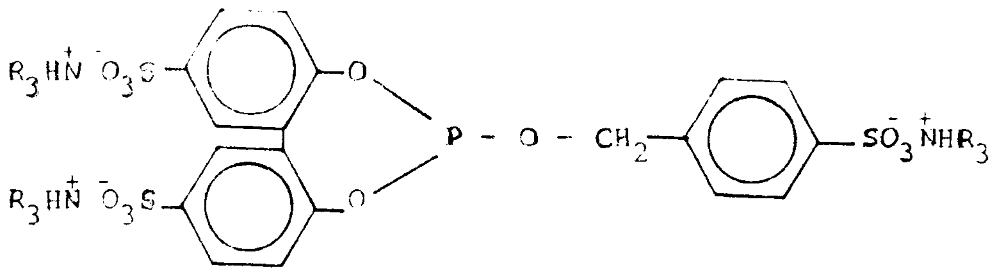

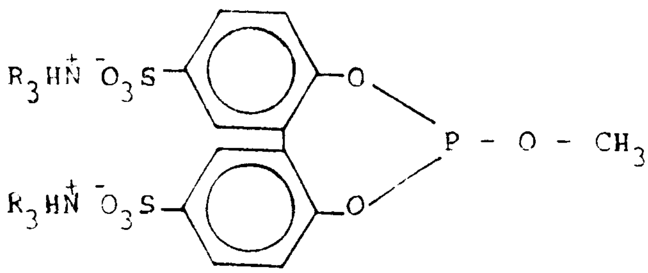

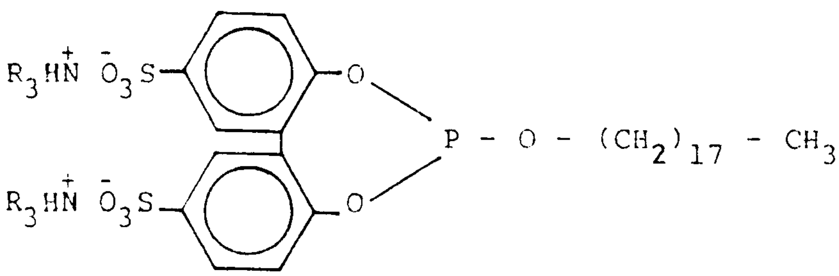

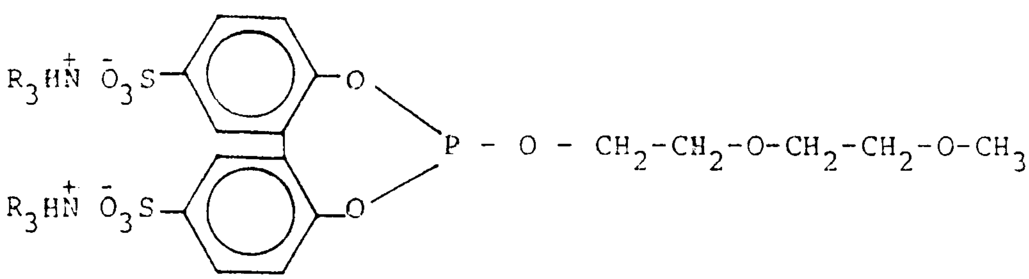

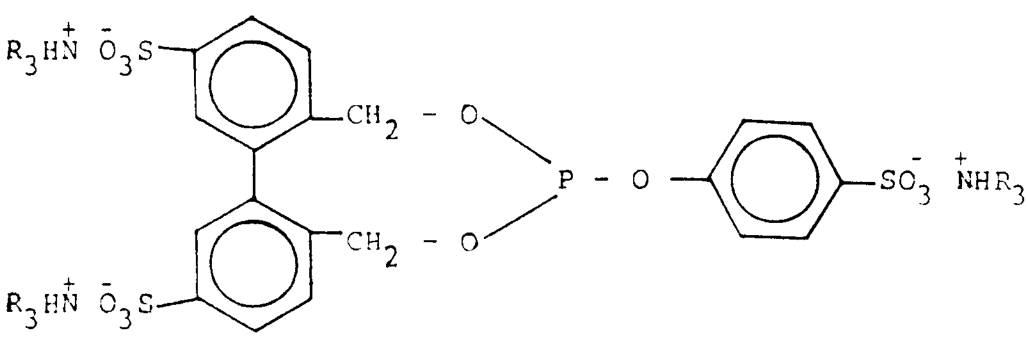

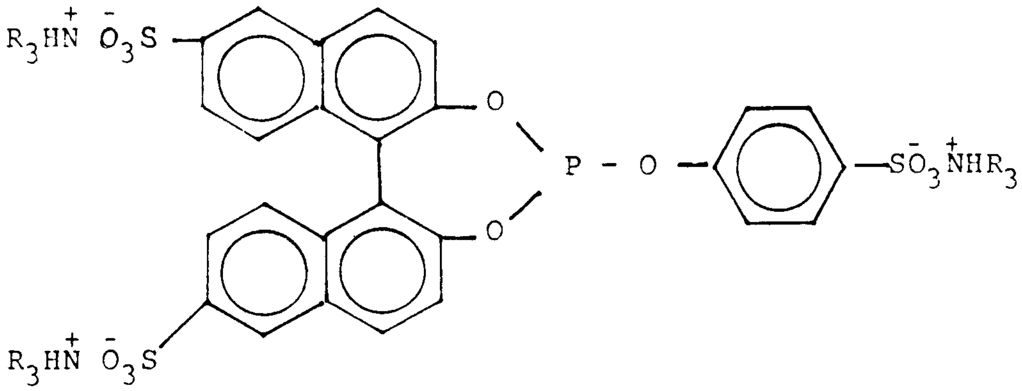

$(R = -C_8H_{17})$

Wichtig sind weiterhin Phosphite der allgemeinen Formel (4)

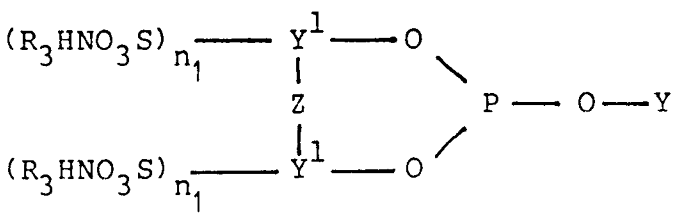

(4)

In ihr hat Y die unter Formel (1) wiedergegebene Bedeutung, $Y^1$ ist gleich oder verschieden und steht für Arylalkyl-, Alkylaryl-, Aryl-, Biaryl-, Naphthyl- oder Binaphthylreste insbesondere für den Benzolrest. Z ist $-CH_2-$, $-(CH_2)_2-$oder $-(CH_2)_3-$ und $n_1$ entspricht der unter Formel (2) gegebenen Definition.

Bevorzugte Ammoniumsulfonate von Phosphiten gemäß Formel (4) sind:

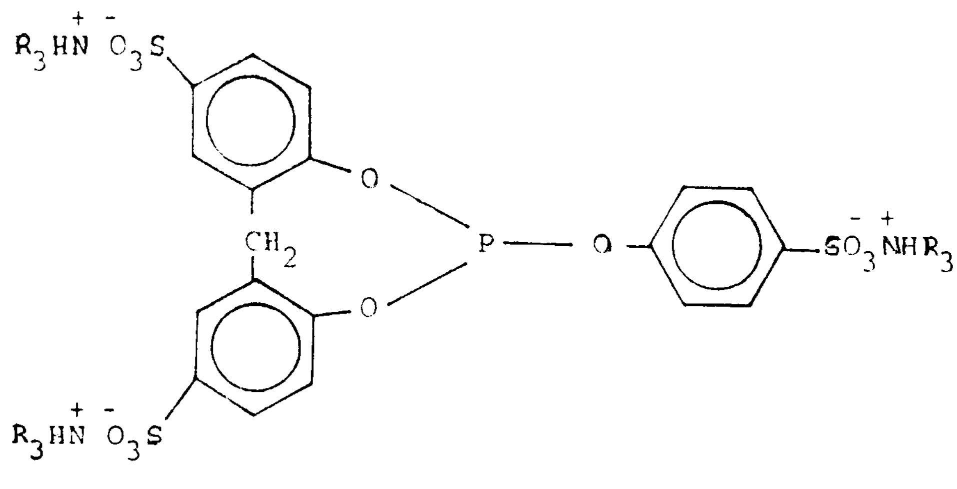

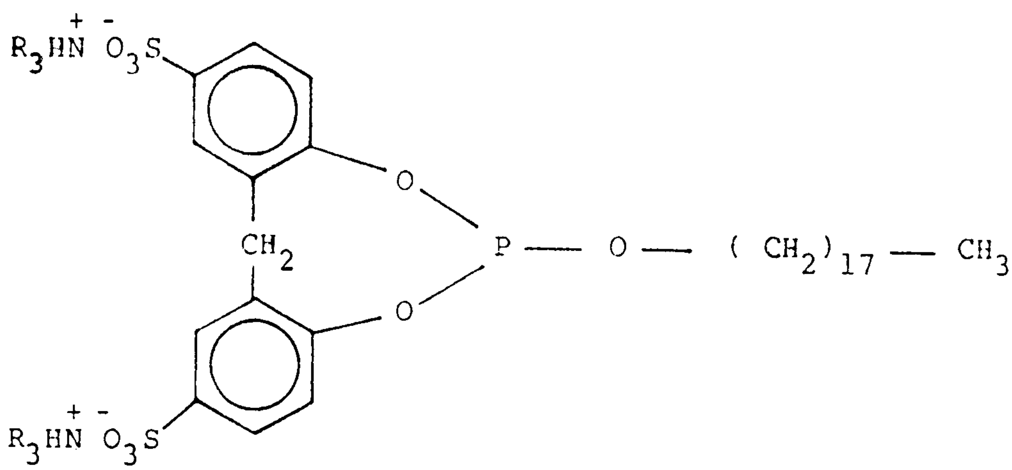

Schließlich sind auch die nach dem erfindungsgemaßen Verfahren hergestellten Phosphite der allgemeinen Formel (5) von großem Interesse.

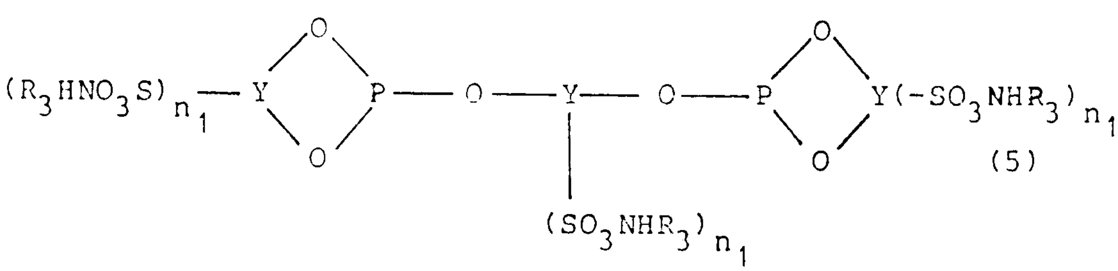

(5)

Von den in der vorstehenden allgemeinen Formel enthaltenen Symbolen steht Y für die unter Formel (1) wiedergegebenen organischen Reste, insbesondere für solche, die sich vom Benzol, vom Biphenyl und vom Naphthalin sowie von Alkanen mit 2 bis 6 C-Atomen ableiten. $n_1$ und R haben die unter Formel (3) aufgeführten Bedeutungen.

Bevorzugte Ammoniumsulfonate von Phosphiten entsprechend Formel (5) sind:

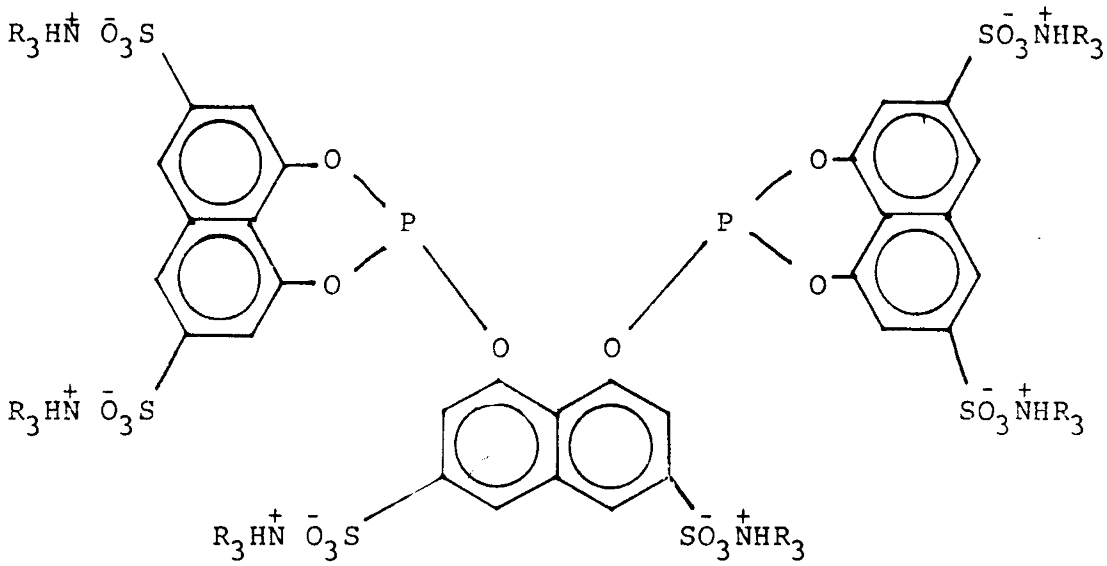

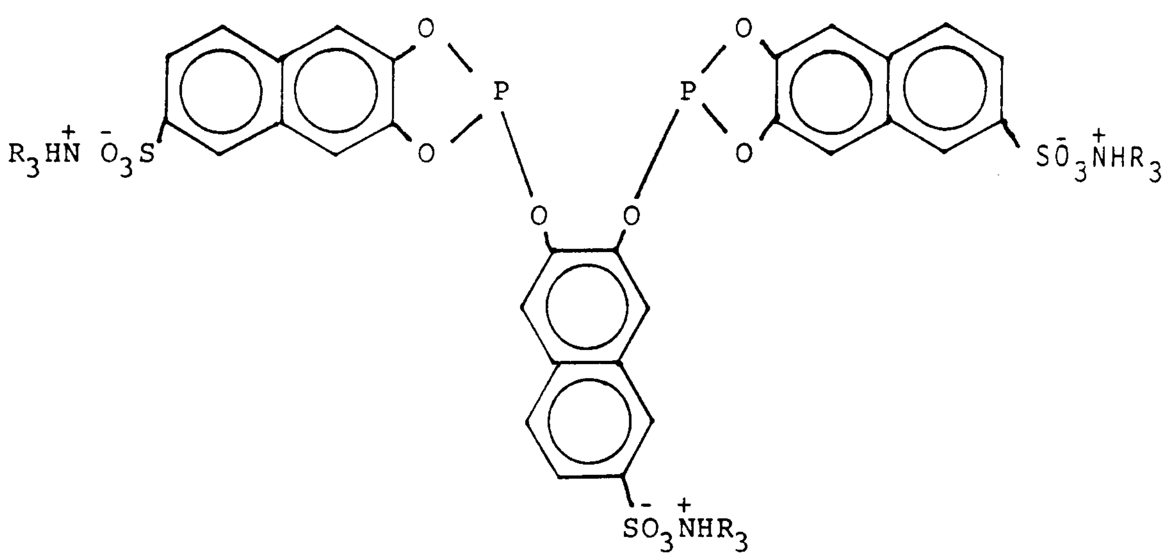

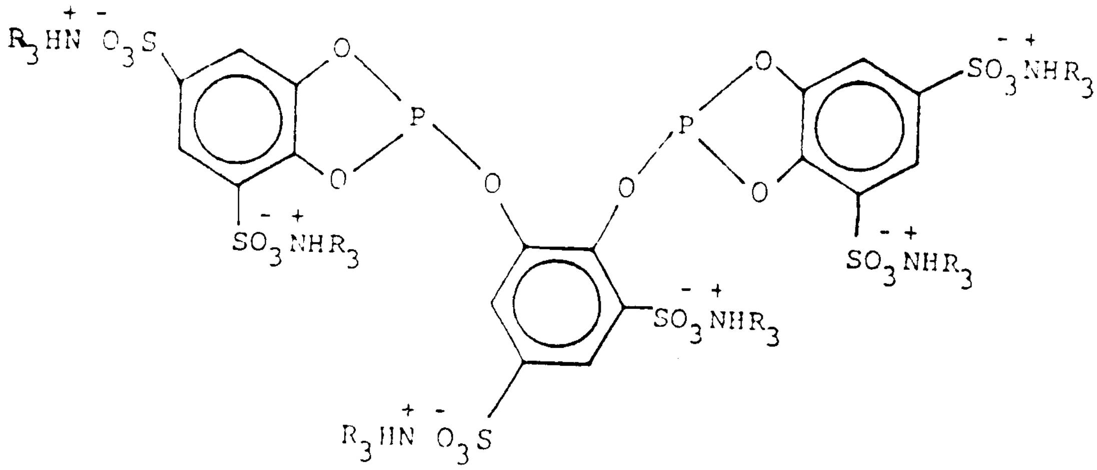

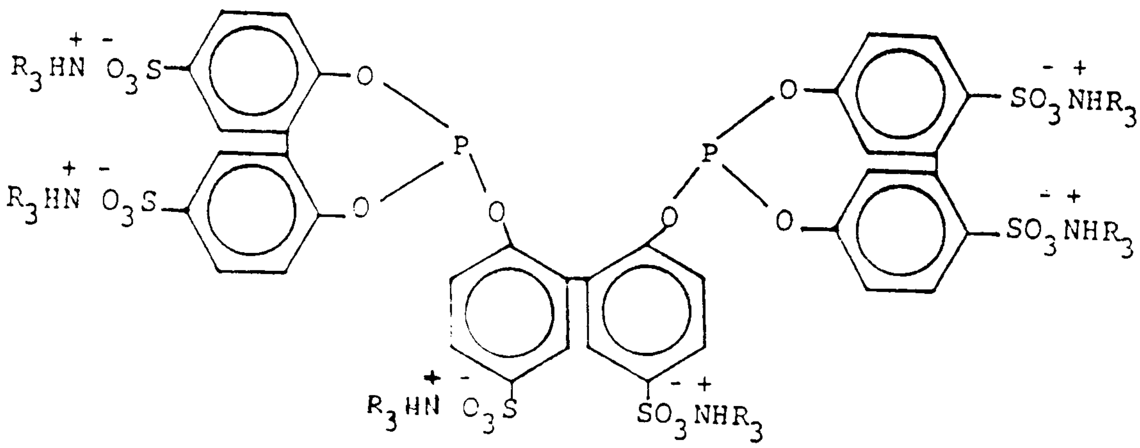

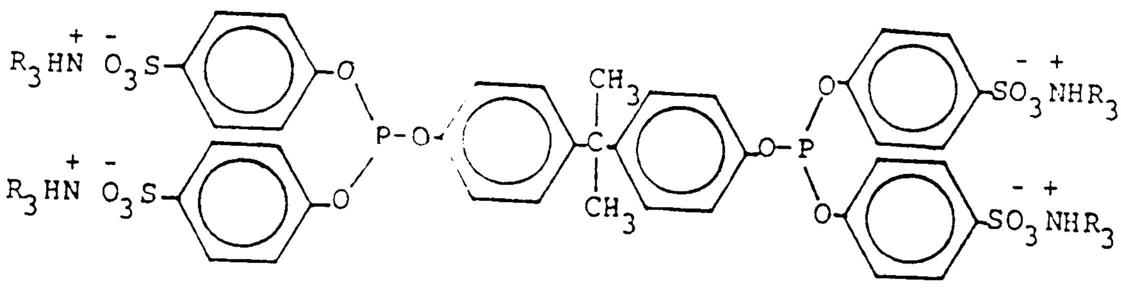

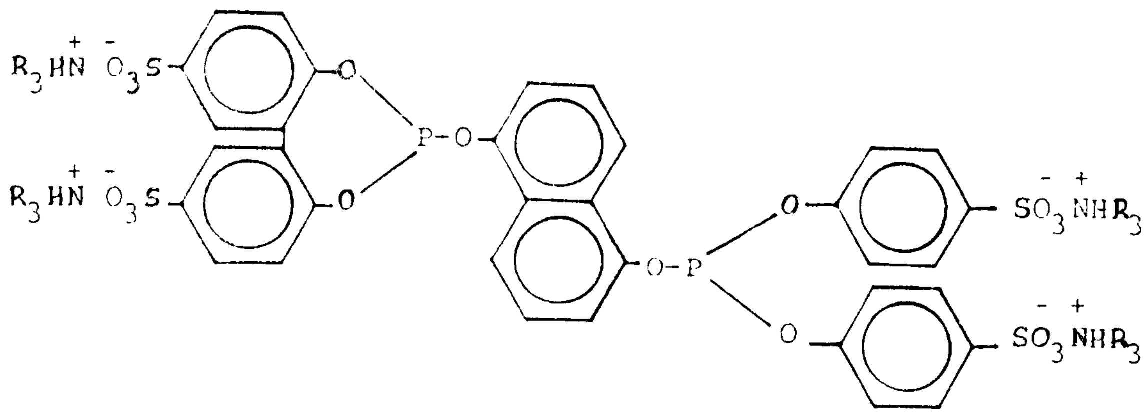

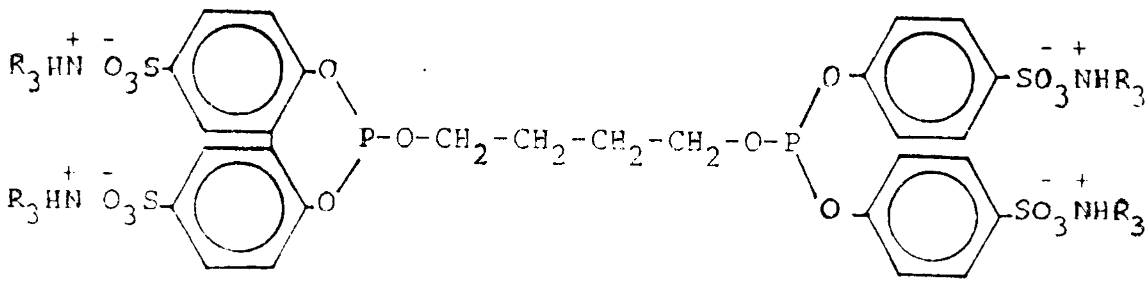

Die folgenden Beispiele veranschaulichen die Erfindung, begrenzen sie jedoch nicht.

Folgende Abkürzungen werden verwendet:

| | |
|---|---|
| TPPpTS | Triphenylphosphittrisulfonsäure |
| TPPpDS | Triphenylphosphitdisulfonsäure |
| TPPpMS | Triphenylphosphitmonosulfonsäure |
| TIOA | Triisooctylamin |

Beispiel 1:

Herstellung von TPPpTS-TIOA, TPPpDS-TIOA und TPPpMS-TIOA

In einem mit Rührer, Thermometer, Tropftrichter und Rückflußkühler ausgerüsteten 2 1-Dreihalskolben, der vorher ausgeheizt und mit Argon gefüllt worden war, werden 160,7 g einer 65%-igen wäßrigen 4-Hydroxybenzolsulfonsäure-Lösung (das entspricht 104,5 g (= 0,6 mol) 4-Hydroxybenzolsulfonsäure) und 150 ml destilliertes Wasser vorgelegt. Zu dieser Lösung tropft man eine Lösung von 211,8 g (0,6 mol) TIOA in 500 ml Toluol und rührt 3 Stunden. Die untere, farblose, wäßrige Phase wird abgetrennt und verworfen. Die orange gefärbte TIOA/Toluol-Schicht wird mit aktiviertem $Na_2SO_4$ über Nacht getrocknet, darauf vom Trockenmittel abfiltriert und 12 Stunden am Wasserabscheider erhitzt; es scheiden sich 8,5 g Wasser ab.

Zu der getrockneten TiOA/Toluol-Lösung tropft man innerhalb einer Stunde bei 140 °C Ölbadtemperatur und unter Rückflußkühlung eine Lösung von 62,5 g (0,2 mol) Triphenylphosphit und 5 g (0,01 mol) TIOA in 150 ml absolutem Toluol. Anschließend wird destilliert. Zunächst geht bei 110 °C Toluol über, darauf bei 78 °C/2,27 kPa (17 Torr) innerhalb von 16 Stunden 29 g Phenol und bei 30 °C/133,3 Pa (1 Torr) innerhalb von 8 Stunden weitere 14 g Phenol. Schließlich wird bei 65 °C/1,3 Pa (0,01 Torr) nicht umgesetztes Triphenylphosphit abdestilliert. Es bleibt eine gelbe zähflüssige Substanz zurück, die mittels $^{31}$P-NMR-, $^{1}$H-NMR- und IR-Spektroskopie sowie mittels HPLC charakterisiert wird. Ausbeute: 245,6 g = 76 % der Theorie. Das Reaktionsprodukt ist aufgrund des $^{31}$P-NMR-Spektrums wie folgt zusammengesetzt:

| | |
|---|---|
| TPPpTS-TIOA | 33 % |
| TPPpDS-TIOA | 46 % |
| TPPpMS-TIOA | 21 % |

Analysen

A. $^{31}$P-NMR (200 MHz, $CDCl_3$ als Lösungsmittel, 85 Gew.-%ige Phosphorsäure als externer Standard).

$\delta$TPPpTS-TIOA = + 127,5 ppm
$\delta$TPPpDS-TIOA = + 128,0 ppm
$\delta$TPPpMS-TIOA = + 128,4 ppm
$\delta$(Triphenylphosphit) = + 128,8 ppm (in Spuren)

B. $^{1}$H-NMR (80MH$_2$, $CDCl_3$)

| $\delta$/ppm | Aufspaltung | Integral/cm | Proton |
|---|---|---|---|
| 7,85 | d | 0,55 | $H_a$ |
| 7,3 - 7,05 | m | 1,9 | $H_b$ |
| 3,01 | m | 2,1 | $H_c$ |
| 1,83-0,7 | m | 17,7 | $H_d$ |

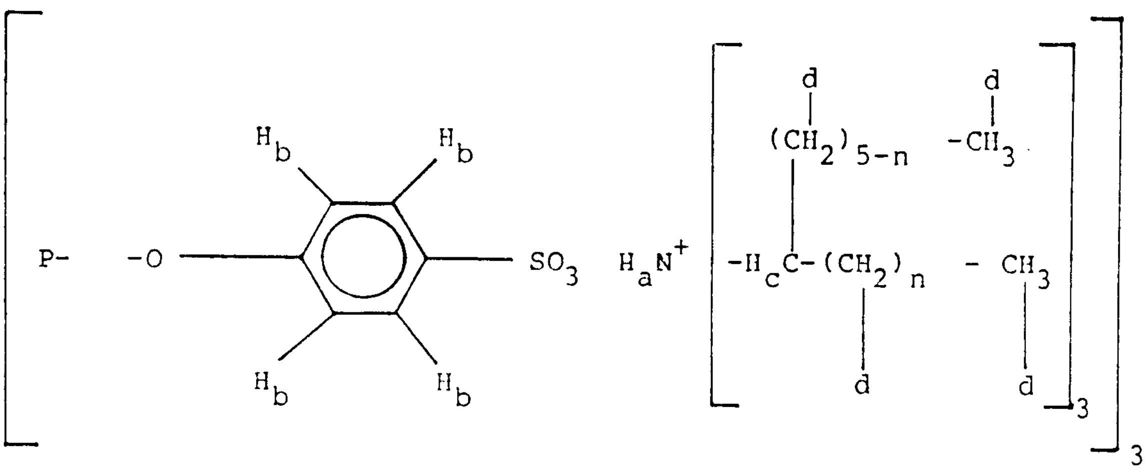

(n=1-3)

c. IR-Spektrum (KBr-Preßling)
2960 - 2840 cm$^{-1}$ $\nu$CH
1590 - 1485 cm$^{-1}$ $\nu$C=C
1465 cm$^{-1}$ $\delta$ - $CH_3$
1240 - 1160 cm$^{-1}$ und 1030 cm$^{-1}$ -$SO_3$
1240 - 1160 cm$^{-1}$ P-O-Q
D. HPLC-Analyse: (RP8-Säule, Lösungsmittelverhältnis Methanol/$H_2$0 = 90/10)
RT = 2,22 und 2,55 min, bei RT = 4,78 min sind Spuren von Triphenylphosphit zu erkennen (RT = Retentionszeit)

Hydrolyse von TPPpTS-TIOA, TPPpDS-TIOA und TPPpMS-TIOA

Der Verlauf der Hydrolyse von TPPpTS-TIOA, TPPpDS-TIOA und TPPpMS-TIOA in Aceton bei 56 °C gegenüber der Hydrolyse von Triphenylphosphit unter den gleichen Bedingungen wird durch $^{31}$P-NMR-Spektroskopie untersucht.

A. Hydrolyse in Gegenwart eines Lösungsmittels

(a) Triphenylphosphit
Zu einer Lösung von 0,962 g (3,10 mmol) Triphenylphosphit in 10 ml Aceton (über $CaCl_2$ getrocknet) werden 1,675 g (93,06 mmol) destilliertes Wasser gegeben. Diese Mischung wird unter Rückfluß und starkem Rühren auf 56 °C erhitzt. Im Abstand von jeweils einer Stunde wird eine Probe abgenommen und mittels $^{31}$P-NMR-Spektroskopie der Fortgang der Hydrolyse untersucht.

| Ergebnis: | | | |
|---|---|---|---|
| Stunden | 1 | 2 | 3 |
| Hydrolyseprodukte in (%) | 19,8 | 97,0 | 100 |

(b) TPPpTS-TIOA, TPPpDS-TIOA, TPPpMS-TIOA
Zu einer Lösung von 5,0 g ( 3,10 mmol) TPPpTS-TIOA (im Gemisch mit TPPpDS- und TPPpMS-TIOA) in 10 g Aceton (über $CaCl_2$ getrocknet) werden 1,675 g (93,06 mmol) destilliertes Wasser gegeben und wie unter (a) beschrieben weiterbehandelt.

| Ergebnis: | | | | | | |
|---|---|---|---|---|---|---|
| Stunden | 1 | 2 | 3 | 4 | 5 | 24 |
| Hydrolyseprodukte in (%) | 2,5 | 6,5 | 7,4 | 15,7 | 19,1 | 100 |

B. Hydrolyse von Triphenylphosphit und von Triphenylphosphittrisulfonsäure-triisooctylammoniumsalz ohne Lösungsmittel bei 25 °C

(a) Triphenylphosphit
10 g (32,2 mmol) Triphenylphosphit werden in einem Becherglas mit 20 g (1,11 mol) destilliertem Wasser etwa eine halbe Stunde bei 25 °C gerührt. Wie das $^{31}$P-NMR-Spektrum zeigt, ist das Triphenylphosphit nach 18 Stunden hydrolysiert.
(b) TPPpTS-TIOA, TPPpDS-TIOA, TPPpMS-TIOA
10 g (6,2 mol) TPPpTS-TIOA (im Gemisch mit TPPpDS- und TPPpMS-TIOA) werden in einem Becherglas mit 20 g (1,11 mol) destilliertem Wasser etwa eine halbe Stunde bei 25 °C gerührt. Wie das $^{31}$P-NMR-Spektrum zeigt, wird TPPpTS-TIOA innerhalb 18 Stunden nur zu 6,3 % hydrolysiert.

Beispiel 2:

Herstellung von o-Phenylenphosphithexasulfonsäurehexa(triisooctylammonium)salz

In einem mit Rührer, Thermometer und Rückflußkühler ausgestatteten 4 l Dreihalskolben werden 332,22 g (1,0 mol) Brenzkatechin-3,5-disulfonsäuredinatriumsalzmonohydrat (Tiron-monohydrat) in 600 ml destilliertem Wasser vorgelegt. Zu dieser Lösung tropft man 450 ml 2m $H_2SO_4$ und rührt intensiv 2 Stunden unter Kühlung. Darauf fügt man tropfenweise unter Kühlung eine Mischung aus 707,36 g (2 mol) Triisooctylamin in 900 ml Toluol hinzu und rührt über Nacht. Die untere wäßrige Schicht wird abgetrennt und verworfen. Die Tiron-/Triisooctylamin-/Toluolschicht wird anschließend über $Na_2SO_4$ getrocknet, mit 200 ml Toluol versetzt und über Nacht am Wasserabscheider unter Rückfluß erhitzt. 14 g Wasser werden abgeschieden. Eine Lösung von 206,8 g (0,666 mol) Triphenylphosphit und 10 g (0,028 mol) TIOA in 600 ml absolutem Toluol wird bei 150 °C Ölbadtemperatur innerhalb von 3 Stunden zu der Mischung getropft. Nach Beendigung der Zugabe kocht man eine weitere Stunde unter Rückfluß. Anschließend wird destilliert. Zunächst geht Toluol über, darauf bei 30 °C/133,3 Pa (1 Torr) innerhalb von 70 Stunden 124 g Phenol. Überschüssiges Triphenylphosphit kann nicht abdestilliert werden. Es bleibt eine gelbe sehr zähflüssige Substanz zurück, die mittels $^{31}$P-NMR-Spektroskopie charakterisiert wird. Ausbeute: 672 g = 66 % d. Theorie (bez. auf das abdestillierte Phenol).

Analyse

$^{31}$P-NMR (200 MHz, $CDCl_3$, 85 Gew.-%-ige Phosphorsäure als externer Standard)

δ(o-Phenylenphosphithexasulfonsäure-triisooctylammoniumsalz) = + 130,6 ppm
δ(Triphenylphosphit) = + 128,9 ppm (Spuren)

Beispiel 3:

Herstellung von o-Phenylenphosphithexasulfonsäure-triisooctylammoniumsalz

In einem mit Rührer, Thermometer und Rückflußkühler ausgestatteten 1 l Dreihalskolben werden zu 20 g (= 60,2 mmol) Brenzkatechin-3,5-disulfonsäuredinatriumsalzhydrat (Tironmonohydrat) innerhalb von 2 h unter intensiver Kühlung 200 ml 2 m $H_2SO_4$ getropft. Zu der entstandenen Lösung tropft man eine Lösung von 42,52 g(=120,4 mmol) TIOA in 175 g Toluol und rührt 3 Stunden. Die wäßrige Schwefelsäure enthaltende Schicht (untere Schicht) wird abgetrennt und verworfen. Die Tiron/TIOA-Toluolschicht wird anschließend über $MgSO_4$ getrocknet, mit 200 ml Toluol versetzt und über Nacht am Wasserabscheider erhitzt. Es werden 1,1 g (= 0,06 mol) $H_2O$ abgeschieden. Eine Lösung von 5,51 g (= 40,13 mmol) $PCl_3$ in 100 ml Toluol wird innerhalb 1 Stunde zu der Mischung getropft. Die Ölbadtemperatur beträgt 140 °C. Über 3 Stunden ist HCl-Entwicklung zu beobachten. Die Farbe der Lösung schlägt von gelb nach rotbraun um. Insgesamt wird 4 Stunden unter Rückfluß erhitzt. Nach Abkühlung auf Raumtemperatur wird durch die Lösung 1 Stunde lang unter starkem Rühren Argon geleitet, um letzte Reste HCl zu entfernen. Anschließend wird Toluol abdestilliert. Es bleibt ein rotbraunes, sehr dickflüssiges Öl zurück.

Analyse:

$^{31}$P-NMR (200 MHz, $CDCl_3$, 85 Gew.%-ige Phosphorsäure als externer Standard)

δ(o-Phenylenphosphithexasulfonsäuretriisooctylammonium salz) = + 130,7 ppm

Bei δ = + 72,7 ppm, δ = + 13,1 ppm, δ = - 10,5 ppm sind noch Signale zu erkennen, die aus Verunreinigungen zustande kommen.

**Patentansprüche**

1. Verfahren zur Herstellung hydrolysestabiler Phosphite, dadurch gekennzeichnet, daß man organische Phosphite oder Phosphorhalogenverbindungen der allgemeinen Formeln $PX_3$ oder $(R^3O)PX_2$, wobei X für Chlor, Brom oder Jod und $R^3$ für gegebenenfalls substituierte aliphatische, cycloaliphatische oder aromatische Kohlenwasserstoffreste stehen, mit der äquivalenten Menge oder einem Überschuß oder einem Unterschuß eines in Wasser unlöslichen, in einem organischen Lösungsmittel löslichen Ammoniumsalz einer Hydroxysulfonsäure umsetzt.

2. Verfahren nach Anspruch 1, dadurch gekennzeichnet, daß man das Ammoniumsalz der Hydroxysu1fonsäure in Form des bei der Umsetzung der wäßrigen Lösung einer Hydroxysulfonsäure oder der angesäuerten Lösung eines wasserlöslichen Salzes der Hydroxysulfonsäure mit der Lösung eines wasserunlöslichen Amins in einem wasserunlöslichen organischen Lösungsmittel erhaltenen Produktes einsetzt.

3. Verfahren nach Anspruch 2, dadurch gekennzeichnet, daß die Hydroxysulfonsäure oder deren wasserlösliches Salz eine Verbindung der allgemeinen Formel

$$(MO_3S)_n - Y - (OH)_m$$

ist, in der Y ein organischer Rest ist M ein Wasserstoff-, Alkalimetall- oder Ammoniumion der Formel $[NR_4]^+$,in der R für Wasserstoff und/oder gleiche oder verschiedene geradkettige oder verzweigte $C_1$- bis $C_4$-Alkylreste steht oder das Äquivalent eines Erdalkalimetall-, Blei- oder Kupferions bedeutet, m eine ganze Zahl von 1 bis 3 und n eine ganze Zahl von 1 bis 4 ist.

4. Verfahren nach Anspruch 2 dadurch gekennzeichnet, daß in der allgemeinen Formel $(MO_3S)_n$ - Y - $(OH)_m$ Y einen geradkettigen oder verzweigten, gesättigten aliphatischen Rest mit 2 bis 20 Kohlenstoffatomen, einen ein- oder zweikernigen cycloaliphatischen Rest mit 5 bis 12 Kohlenstoffatomen, einen vom Benzol, Biphenyl, Naphthalin, Binaphthyl abgeleiteten Rest, einen Benzylrest, einen von Toluol, Ethylbenzol, den isomeren Xylolen abgeleiteten Rest oder einen von gesättigten oder ungesättigten Stickstoff enthaltenden Fünf- oder Sechsringen, insbesondere Pyridin abgeleiteten Rest bedeutet.

5. Verfahren nach einem oder mehreren der Ansprüche 2 bis 4, dadurch gekennzeichnet, daß die wäßrige Lösung des Salzes der Hydroxysulfonsäure mit $H_2SO_4$, HCl, $HNO_3$, $H_3PO_4$, HF oder $HBF_4$ angesäuert wird.

6. Verfahren nach einem oder mehreren der Ansprüche 2 bis 5 dadurch gekennzeichnet, daß man je Äquivalent Sulfonsäure 0,8 bis 1,2 Mol Amin verwendet.

7. Verfahren nach einen oder mehreren der Ansprüche 1 bis 6, dadurch gekennzeichnet, daß sich das in organischen Lösungsmitteln lösliche Ammoniumsalz von in Wasser unlöslichen geradkettigen oder verzweigten aliphatischen Aminen die insgesamt 10 bis 60, vorzugsweise 12 bis 36 Kohlenstoffatomen enthalten ableitet.

8. Verfahren nach einem oder mehreren der Ansprüche 2 bis 7, dadurch gekennzeichnet, daß als Lösungsmittel für das Amin Toluol oder kerosinähnliche Kohlenwasserstofffraktionen verwendet werden.

9. Verfahren nach einem oder mehreren der Ansprüche 1 bis 8, dadurch gekennzeichnet, daß die Umsetzung des organischen Phosphits in Gegenwart von Natrium, Amin, Natriumalkoholat, Aluminiumchlorid, Titansäureester oder Phosphorigsäure-dialkylester als Katalysator erfolgt.

10. Verfahren nach einem oder mehreren der Ansprüche 1 bis 9, daß man das durch die Umesterung freigesetzte Phenol kontinuierlich am Dünnschichtverdampfer unter Vakuum abzieht.

## Claims

1. A process for the preparation of a phosphite which is stable to hydrolysis, which comprises reacting an organic phosphite or phosphorus-halogen compound of the formula $PX_3$ or $(R^3O)PX_2$, in which X is chlorine, bromine or iodine and $R^3$ is an optionally substituted aliphatic, cycloaliphatic or aromatic hydrocarbon radical, with the equivalent amount or an excess or a deficit of an ammonium salt of a hydroxysulfonic acid which is insoluble in water and soluble in an organic solvent.

2. The process as claimed in claim 1, wherein the ammonium salt of the hydroxysulfonic acid is employed in the form of the product obtained in the reaction of an aqueous solution of a hydroxysulfonic acid or an acidified solution of a water-soluble salt of the hydroxysulfonic acid with a solution of a water-insoluble amine in a water-insoluble organic solvent.

3. The process as claimed in claim 2, wherein the hydroxysulfonic acid or a water-soluble salt thereof is a compound of the formula

$$(MO_3S)_n - Y - (OH)_m$$

in which Y is an organic radical, M is a hydrogen ion, alkali metal ion or ammonium ion of the formula $[NR_4]^+$, in which R is hydrogen and/or identical or different straight-chain or branched $C_1$- to $C_4$-alkyl radicals or the equivalent of an alkaline earth metal ion, lead ion or copper ion, m is an integer from 1 to 3 and n is an integer from 1 to 4.

4. The process as claimed in claim 2, wherein, in the formula $(MO_3S)_n$ - Y - $(OH)_m$, Y is a straight-chain or branched, saturated aliphatic radical having 2 to 20 carbon atoms, a mono- or dinuclear cycloaliphatic radical having 5 to 12 carbon atoms, a radical which is derived from benzene, biphenyl, naphthalene or binaphthyl, a benzyl radical, a radical which is derived from toluene, ethylbenzene or the isomeric xylenes or a radical derived from saturated or unsaturated nitrogen-containing five- or six-membered rings, in particular pyridine.

5. The process as claimed in one or more of claims 2 to 4, wherein the aqueous solution of the salt of the hydroxysulfonic acid is acidified with $H_2SO_4$, HCl, $HNO_3$, $H_3PO_4$, HF or $HBF_4$.

6. The process as claimed in one or more of claims 2 to 5, wherein 0.8 to 1.2 mol of amine are used per equivalent of sulfonic acid.

7. The process as claimed in one or more of claims 1 to 6, wherein the ammonium salt which is soluble in organic solvents is derived from a water-insoluble straight-chain or branched aliphatic amine containing a total of 10 to 60, preferably 12 to 36, carbon atoms.

8. The process as claimed in one or more of claims 2 to 7, wherein toluene or kerosine-like hydrocarbon fractions are used as the solvent for the amine.

9. The process as claimed in one or more of claims 1 to 8, wherein the reaction of the organic phosphite is carried out in the presence of sodium, an amine, a sodium alcoholate, aluminum chloride, a titanic acid ester or a phosphorous acid dialkyl ester as the catalyst.

10. The process as claimed in one or more of claims 1 to 9, wherein the phenol liberated by the transesterification is continuously stripped off in vacuo using a thin film evaporator.

**Revendications**

1. Procédé de préparation de phosphites stables à l'hydrolyse, procédé caractérisé en ce qu'on fait réagir des phosphites organiques ou des composés halogénés du phosphore, de formules générales $PX_3$ ou $(R^3O)PX_2$, dans lesquelles X représente le chlore, le brome ou l'iode, et $R^3$ représente des restes d'hydrocarbures aliphatiques, cycloaliphatiques ou aromatiques éventuellement substitués, avec la quantité équivalente ou avec un excès ou une quantité insuffisante d'un sel d'ammonium d'un acide hydroxysulfonique, insoluble dans l'eau et soluble dans un solvant organique.

2. Procédé selon la revendication 1, caractérisé en ce qu'on fait réagir le sel d'ammonium de l'acide hydroxysulfonique sous forme du produit obtenu lors de la réaction de la solution aqueuse d'un acide hydroxysulfonique ou de la solution, acidifiée, d'un sel hydrosoluble de l'acide hydroxysulfonique avec la solution d'une amine insoluble dans l'eau, dans un solvant organique insoluble dans l'eau.

3. Procédé selon la revendication 2, caractérisé en ce que l'acide hydroxysulfonique ou son sel hydrosoluble est un composé de formule générale :

$$(MO_3S)_n - Y - (OH)_m$$

dans laquelle Y représente un reste organique ; M représente un atome d'hydrogène, de métal alcalin ou d'un ion ammonium de formule $(NR_4)^+$, dans laquelle R représente un atome d'hydrogène ou les symboles R, identiques ou différents, représentent chacun un reste alkyle linéaire où ramifié en $C_1$ à $C_4$ ou bien l'équivalent d'un ion de métal alcalino-terreux, de plomb ou de cuivre ; m est un nombre entier valant 1 à 3 et n est un nombre entier valant 1 à 4.

4. Procédé selon la revendication 2, caractérisé en ce que, dans la formule générale $(MO_3S)_n - Y - (OH)_m$, le symbole Y représente un reste aliphatique linéaire ou ramifié, saturé, comportant 2 à 20 atomes de carbone, un reste cycloaliphatique à 1 ou 2 noyaux comportant 5 à 12 atomes de carbone, un reste dérivé du benzène, du biphényle, du naphtalène, du binaphtyle, un reste benzyle, un reste dérivé du toluène, de l'éthylbenzène, des xylènes isomères ou un reste dérivé d'un composé comportant des noyaux pentagonaux ou hexagonaux, en particulier la pyridine, reste saturé ou insaturé contenant de l'azote.

5. Procédé selon une ou plusieurs des revendications 2 à 4, caractérisé en ce que la solution aqueuse du sel de l'acide hydroxysulfonique est acidifiée par $H_2SO_4$, HCl, $HNO_3$, $H_3PO_4$, HF ou $HBF_4$.

6. Procédé selon une ou plusieurs des revendications 2 à 5, caractérisé en ce qu'on utilise, pour chaque équivalent d'acide sulfonique, 0,8 à 1,2 mol d'amine.

**7.** Procédé selon une ou plusieurs des revendications 1 à 6, caractérisé en ce que le sel d'ammonium, soluble dans des solvants organiques, dérive d'amines aliphatiques, linéaires ou ramifiées, insolubles dans l'eau et qui contiennent au total 10 à 60, avantageusement 12 à 36, atomes de carbone.

**8.** Procédé selon une ou plusieurs des revendications 2 à 7, caractérisé en ce qu'on utilise comme solvant pour l'amine le toluène ou des fractions d'hydrocarbures analogues à du kérosène.

**9.** Procédé selon une ou plusieurs des revendications 1 à 8, caractérisé en ce que la réaction du phosphite organique a lieu en présence de sodium, d'une amine, d'un alcoolate de sodium, de chlorure d'aluminium, d'un ester de l'acide titanique ou d'un ester dialkylique de l'acide phosphoreux comme catalyseur.

**10.** Procédé selon une ou plusieurs des revendications 1 à 9, caractérisé en ce qu'on retire en continu, dans un évaporateur à couche mince sous vide, le phénol libéré au cours de la réaction.